# EUROPÄISCHE PATENTSCHRIFT

(11) **EP 2 907 327 B1**
(45) Veröffentlichungstag und Bekanntmachung des Hinweises auf die Patenterteilung: **16.11.2016**
(21) Anmeldenummer: 14708520.3
(22) Anmeldetag: 26.02.2014
(51) Int. Cl.: H04W 4/00, H04W 4/02, H04W 4/04, G08G 1/01

(54) **VERFAHREN UND VORRICHTUNG ZUR KOMMUNIKATION ZWISCHEN VERKEHRSTEILNEHMERN UND VERKEHRSINFRASTRUKTUR AUF GRUNDLAGE EINES AD-HOC DRAHTLOS-KFTFAHRZEUG-KOMMUNIKATIONSSYSTEMS ZUR VERKEHRSSTEUERUNG**
METHOD AND DEVICE FOR COMMUNICATION BETWEEN ROAD USERS AND/OR PEDESTRIANS AND A TRAFFIC INFRASTRUCTURE ON THE BASIS OF AN AD-HOC WIRELESS MOTOR VEHICLE COMMUNICATIONS SYSTEM FOR TRAFFIC CONTROL
PROCÉDÉ ET DISPOSITIF DE COMMUNICATION ENTRE DES USAGERS DE LA VOIE PUBLIQUE ET UNE INFRASTRUCTURE ROUTIÈRE SUR LA BASE D'UN SYSTÈME DE COMMUNICATION SANS FIL DE VÉHICULE AUTOMOBILE AD-HOC POUR LA COMMANDE DE LA CIRCULATION

(30) Priorität: 21.03.2013 DE 102013205057
(43) Veröffentlichungstag der Anmeldung: 19.08.2015
(73) Patentinhaber: Siemens Aktiengesellschaft, 80333 München (DE)
(72) Erfinder: KARACAN, Ömer, A-1230 Wien (AT); KASSLATTER, Fritz, A-3003 Gablitz (AT)
(86) Internationale Anmeldenummer: PCT/EP2014/053690
(87) Internationale Veröffentlichungsnummer: WO 2014/146874

(56) Entgegenhaltungen:
- EP-A2- 2 315 189
- NAZMUS S NAFI ET AL: "A VANET based Intelligent Road Traffic Signalling System", TELECOMMUNICATION NETWORKS AND APPLICATIONS CONFERENCE (ATNAC), 2012 AUSTRALASIAN, IEEE, 7. November 2012 (2012-11-07), Seiten 1-6, XP032293687, DOI: 10.1109/ATNAC.2012.6398066 ISBN: 978-1-4673-4408-1
- "Intelligent Transport Systems (ITS); Communications Architecture", ETSI DRAFT; DRAFT_EN_302665V010001V, EUROPEAN TELECOMMUNICATIONS STANDARDS INSTITUTE (ETSI), 650, ROUTE DES LUCIOLES ; F-06921 SOPHIA-ANTIPOLIS ; FRANCE, Nr. V1.0.1, 19. Juli 2012 (2012-07-19), Seiten 1-43, XP014072772, [gefunden am 2012-07-19]

## Beschreibung

Die Erfindung betrifft ein Verfahren zum Betreiben einer stationären Einrichtung innerhalb eines Systems zur Kommunikation gemäß dem Oberbegriff des Anspruchs 1 sowie die stationäre Einrichtung zur Kommunikation innerhalb eines Systems zur Kommunikation gemäß dem Oberbegriff des Anspruchs 21.

Es ist bekannt, dass Funk-Sende-/Funk-Empfangseinrichtungen zur Kommunikation innerhalb eines ad-hoc beispielsweise drahtlos zusammenwirkenden Kraftfahrzeugkommunikationssystems für die Kommunikation zwischen Verkehrsteilnehmern untereinander im Einsatz sind. Ad-hoc zusammenwirkend bedeutet so genannte ad-hoc Netzwerke, also im Wesentlichen sich selbst organisierende spontan durch direkte Kommunikation der beteiligten Netzknoten gebildete bzw. betriebene Netze. Im Straßenverkehr umfasst diese Kommunikation in der Regel Kraftfahrzeuge, daher wird sie auch aus dem Englischen entlehnt "car to car" (C2C) Kommunikation genannt. Diese Kommunikation umfasst aber auch die Kommunikation zur Verkehrsinfrastruktur, die beispielsweise durch so genannte "road side units" (RSU), wie zum Beispiel Ampeln, gebildete Basisstationen zur Vermittlung der Kommunikation bzw. Verbreitung von Informationen an an die Ampel angeschlossene Informationsnetzwerke oder steuernde Verkehrszentralen, gebildet werden. Diese Kommunikation wird - ebenfalls aus dem Englischen entlehnt - "car to infrastructure" (C2I) genannt. Da im Grunde Kraftfahrzeuge nicht die einzigen Verkehrsteilnehmer darstellen, sondern auch Fahrräder bzw. Fahrradfahrer und Fußgänger ebenso beteiligt sind, umfasst diese Kommunikation auch den Austausch von Daten zwischen von ihnen betriebenen Funk-Sende-/Funk-Empfangseinrichtungen und den von Kraftfahrzeugen betriebenen Funk-Sende-/Funk-Empfangseinrichtungen. Hierfür gibt es keinen aus dem Englischen entlehnten Begriff bzw. kein Akronym, aber sie fallen unter den für die Verallgemeinerung dieser Art von Kommunikation bekannten Begriff der "car to X" Technologie bzw. Kommunikation (C2X).

Dabei ist diese Art der Kommunikation von der bekannten Mobilfunkkommunikation zu unterscheiden, da Erstere in der Regel automatisiert, also überwiegend ohne Anstoß oder erforderliche Aktionen des Nutzers erfolgt und dem Zweck dient, verkehrsrelevante Daten zu sammeln und auszutauschen, so dass idealer Weise auf alle möglichen Verkehrssituationen angemessen reagiert werden kann, beispielsweise durch Warnungen des Nutzers oder automatisierte Reaktionen des Kraftfahrzeugs.

Für die Sammlung von Daten und vor allem deren Austausch ist es bekannt, dass jedes Kraftfahrzeug eine zyklische Botschaft im Abstand von wenigen Sekunden aussendet, die eine Fahrzeug-ID und Angaben zu Geschwindigkeit, Richtung und Position enthält.

Es ist ferner bekannt, dass Steuerungen von Straßenkreuzungen, beispielsweise durch Road Side Units (RSU's), durchgeführt werden. Es ist des Weiteren bekannt, dass die Sequenz und das Timing von Ampelschaltungen in Abhängigkeit von Informationen wechselt, die von einer Vielzahl von Sensoren stammen, die in den Boden unterhalb der Straßen, je vorgegebener Fahrspur untergebracht sind. Die Informationen, die detektiert und gemeldet werden, enthalten beispielsweise auf einer mehrspurigen Straße die Fahrzeugpräsenz, die Fahrzeugrichtung sowie Fahrzeuggeschwindigkeit.

Es sind dabei unterschiedliche Sensoren notwendig, um eine exakte Bestimmung der Position und Richtung von Fahrzeugen zu ermöglichen, welche auf einer bestimmten Fahrspur fahren.

Diese Sensoren sind sehr teuer und müssen zur Gewährung einer akkuraten Funktionsfähigkeit häufig gewartet werden. Beispielsweise werden bei bekannten Anordnungen Bewegungsdetektoren, Anwesenheitsdetektoren, Videokameras und andere hoch entwickelte Ausrüstungen genutzt, um den Verkehrsfluss zu bestimmen und die Anwesenheit von Fahrzeugen auf einer bestimmten Fahrspur zu ermitteln, wie insbesondere an Straßenkreuzungen.

Eine günstige Lösung zur Positionsbestimmung und Fahrzeugrichtungsbestimmung auf spezifischen Spuren innerhalb eines Verkehrsgebietes, wie beispielsweise einer Kreuzung, liegt im Scope dieser Erfindung.

Aus der EP 2 315 19 A2 ist Kraftfahrzeugkommunikationssystem bekannt, das ad-hoc drahtlos kommunizierende Fahrzeuge aufweist, die Nachrichten übermitteln aus denen Positionsveränderungen sowie die Historie eines ersten Verkehrsteilnehmers gebildet werden kann.

Der Erfindung liegt daher die Aufgabe zugrunde, die oben genannten Probleme eines ad-hoc zusammenwirkenden, insbesondere Kraftfahrzeug-, Kommunikationssystems zu überwinden.

Diese Aufgabe wird ausgehend vom Verfahren gemäß dem Oberbegriff des Anspruchs 1 durch dessen kennzeichnende Merkmale, sowie ausgehend von der stationären Einrichtung gemäß dem Oberbegriff des Anspruchs 21, durch dessen kennzeichnende Merkmale, gelöst.

Bei dem Verfahren zur Kommunikation auf Grundlage eines nach Art des ad-hoc zusammenwirkenden, insbesondere Drahtlos-, Kraftfahrzeugkommunikationssystems, wobei die Kommunikation zwischen Verkehrsteilnehmern untereinander und/oder zwischen Verkehrsteilnehmern und Verkehrsinfrastruktur erfolgt, wird
a) im Nahfeld eines Knotenpunkts von Verkehrswegen, insbesondere Einmündungen oder Überschneidungen von Verkehrswegen wie Straßen- oder Bahnkreuzungen, eine, einem ersten Verkehrsteilnehmer zugeordnete, Funk-Sende-/FunkEmpfangseinrichtung kontinuierlich eine Nachricht an mindestens eine zweite sich im Funkversorgungsbereich der ersten Funk-Sende-/Funk-Empfangseinrichtung befindende zweite, einer Einrichtung der Verkehrsinfrastruktur zugeordnete, Funk-Sende-/Funk-Empfangseinrichtung gesendet, wobei
b) das Versenden der Nachricht derart erfolgt, dass auf Grundlage der empfangenen Nachricht, eine erste Richtung einer Positionsveränderung des ersten Verkehrsteilnehmers ermittelt wird, und
c) auf Grundlage der Nachrichten eine Historie über ermittelte Richtungen gebildet wird, und
d) eine erste Korrelation zwischen der ersten Richtung und der Historie von Richtungen ermittelt wird, wobei
e) eine zweite Korrelation mit dem Ergebnis der ersten Korrelation und einer für die Steuerung der Verkehrsteilnehmer zugrunde gelegte, insbesondere bei der Initialisierung der Verkehrssteuerung dem geographischen Verlauf entsprechende, Referenzfahrspur vorgezeichneter Fahrspuren am Knotenpunkt von Verkehrswegen ermittelt wird,
f) auf Grundlage der ersten Korrelation und/oder zweiten Korrelation eine Steuerung der Verkehrsteilnehmer erfolgt.

Hierdurch wird es möglich, eine einfache Bestimmung des Streckenverlaufs von Fahrzeugen aber auch zur Verkehrsüberwachung respektive Steuerung bereit zu stellen.

Wird bei Vorhandensein von zumindest zwei Verkehrsteilnehmern, die Historie seitens der Verkehrsinfrastruktur zumindest aufgrund einer relativen Position der Verkehrsteilnehmer zueinander gebildet, so lässt sich effektiv der Verlauf von Fahrspuren ermitteln. Damit wird auch ein flexibles Ermitteln von Fahrspuränderungen, beispielsweise durch Sperrung wegen Bauarbeiten, erreicht. Fehlsteuerungen durch im System statisch hinterlegte und vor allem damit auch festgelegte Fahrspurinformation können so vermieden werden.

Vorteilhaft ist es dabei, wenn bei Vorhandensein von zumindest zwei Verkehrsteilnehmern, die Historie seitens der Verkehrsinfrastruktur aufgrund der zeitlichen Entwicklung der Position des ersten Verkehrsteilnehmers innerhalb eines Zeitfensters gebildet wird. Dies bringt mehrere Vorteile, insbesondere den, dass die aufgenommene und zu verarbeitende Datenmenge begrenzt ist und ferner eine gleichbleibende Referenzgröße besteht, was hilfreich sein kann für eine weitere, insbesondere statistische, Auswertung.

In den bekannten Systemen kann es von Vorteil sein, wenn die Zeitdauer des Zeitfensters, insbesondere auf eine Sekunde, festgelegt wird. Im Rahmen dieser Zeit sind auch aussagekräftige Ergebnisse zu erwarten.

Vorzugsweise erfolgt dabei die Steuerung der Verkehrsteilnehmer derart, dass Informationen von Signalgebern, insbesondere elektronische Schilder, Ampeln, Verkehrsleitsysteme, auf Grundlage der Korrelation verändert werden. Hierdurch ist zeitnahe und situationsangepasste Steuerung möglich, da Signalgeber, insbesondere die Genannten, sich in unmittelbarer Nähe von Verkehrsknoten befinden und diese Nähe einige Vorteile hat, wie beispielsweise, dass die Funksende-/Funkempfangseinrichtungen von geringerer Reichweite eingesetzt werden können.

Dies ist insbesondere von Vorteil, wenn die Nachricht im Nahfeld, insbesondere dem Funksende-/Funkversorgungsbereich der Einrichtung der Verkehrsinfrastruktur, zumindest zeitweise periodisch wiederholt gesendet wird, wie es bei einer weiteren Weiterbildung der Erfindung vorgesehen sein kann. Durch das periodische Senden kann beispielsweise die Fahrt eines Fahrzeugs verfolgt werden, ohne dass Funkkanäle durchgehend belegt sein müssen. Es wirkt sich Ressourcen schonend aus.

Wird, wie gemäß einer Weiterbildung vorgesehen, die Zeitdauer der Periode, insbesondere auf 100 Millisekunden, festgelegt, lässt sich das Verfahren in gängige standardisierte Systeme vom Aufwand her minimiert implementieren.

Von Vorteil kann es sein, wenn das Verfahren dadurch weitergebildet wird, dass die Nachricht eine die Fahrtrichtung, Position, Dimension, Typ und/oder Geschwindigkeit des ersten Verkehrsteilnehmers, insbesondere Fahrzeugs, wiedergebende Information enthält, denn jede der genannten Größen kann für sich genommen oder aber in Kombination - sich verstärkend - die Genauigkeit der Bestimmung des Streckenverlaufs erhöhen. Beispielsweise ermöglicht die Information über die Position in Kombination mit der Dimension oder (Fahrzeug)Typ eine Bestimmung (oder zumindest Abschätzung) der Streckenbegrenzungslinien. Die Fahrtrichtung und Geschwindigkeit kann unter anderem auch für eine Bestimmung der Fahrspurfunktion, d.h. ob es sich beispielsweise um eine Links-/Rechtsabbiegerspur handelt, herangezogen werden. Dies sind aber nur beispielhaft heraus gegriffene Kombinationen.

Vorzugsweise wird die Historie derart gebildet, dass anhand der der in den Zeitfenstern empfangenen Daten Fahrspuren der Fahrzeuge rechnertechnisch ermittelt und derart korreliert werden, dass die für die Steuerung der Verkehrsteilnehmer zugrunde gelegte, insbesondere bei der Initialisierung der Verkehrssteuerung dem geographischen Verlauf entsprechende, Referenzfahrspur vorgezeichneter Fahrspuren am Knotenpunkt von Verkehrswegen durch die Korrelationsmaxima neu gebildet und gespeichert wird. Hiermit ist ein gut zu implementierender und verlässlicher Ablauf für die Bestimmung gegeben, denn Korrelationsmaxima sind ein starkes Indiz dafür wie die Spuren verlaufen. Dies dann zu speichern, ermöglicht eine weitere Verfeinerung zu späteren Zeitpunkten. Außerdem steht so ein selbstlernendes System zur Verfügung, welches in der Lage ist, seine Verkehrstopologie automatisch zu bestimmen und somit auch anzupassen.

Um eine Anpassung einzuleiten kann die vorteilhafte Weiterbildung herangezogen werden, bei der zu festgelegten Ereignissen, insbesondere einem Timerablauf und/oder zumindest bei einer einen Schwellwert übersteigernden Abweichung einer aktuell ermittelten Fahrspur von der Referenzfahrspur, eine Aktualisierung der Referenzfahrspur erfolgt. Hierdurch können zum Beispiel Straßensperren aufgrund von Unfällen bzw. temporäre aber auch längerfristige Änderungen ermittelt und die Verkehrssteuerung entsprechend angepasst werden.

Wird die übermittelte Position auf Grundlage eines satellitengestützten Navigationssystems, wie GPS, Galileo und/oder anderen nationalen und internationalen Navigationssatellitensystemen zur Positionsbestimmung, ermittelt, so wird unter anderem dem Unstand Rechnung getragen, dass derartige Systeme ohnehin im Verkehr sich einer weiten Verbreitung erfreuen, so dass die Erfindung mit geringerem Aufwand implementiert werden kann. Zudem sind diese Systeme auch relativ genau. Alternativen zur Positionsbestimmung wie eine Triangulation durch Basisstationen sind auch ohne Weiteres für die Implementierung der Erfindung geeignet.

Die Erfindung kann auch dahingehend weitergebildet sein, dass die Funk-Sende-/Funk-Empfangseinrichtungen zur Datenübertragung gemäß einem dedizierten Kurzstreckenfunkkommunikationsstandard, insbesondere dem so genannten Dedicated Short Range Communication, "DSRC", betrieben werden. Solche Kurzstreckenfunkstandards sind besonders für die Kommunikation zwischen Vehikeln und anderen mobilen Verkehrsteilnehmern geeignet und gewährleisten durch die Standardisierung, dass die Interaktion auch funktioniert. Insbesondere integriert mit dem WLAN Standard 802.11, wie 802.11a/b/e/g/n/p und weiteren Derivaten Derivaten hiervon, funktioniert dies sehr gut.

Sollen die erfindungsgemäßen Funk-Sende-/Funk-Empfangseinrichtungen in USA betrieben werden, so ist es vorteilhaft, wenn sie zur Datenübertragung gemäß dem so genannten Wireless Access in Vehicular Environments, "WAVE"-, Standard (IEEE1609)oder Derivaten hiervon betrieben werden.

Eine definierte Funkschnittstelle der Funk-Sende-/FunkEmpfangseinrichtungen erhält man dabei, wenn die Funk-Sende/Funk-Empfangseinrichtungen zur Datenübertragung zumindest teilweise gemäß Standard ETSI Intelligent Transportation Systems, ITS" oder seinen Derivaten betrieben werden.

Eine weite Verbreitung und bzw. Durchdringung bringt dabei die Weiterbildung, bei der die Funk-Sende-/Funk-Empfangseinrichtungen zu einer Datenübertragung zumindest teilweise gemäß Standards IEEE802.11 oder seinen Derivaten, insbesondere dem IEEE 802.11p, betrieben werden, da mittlerweile jedes tragbare Unterhaltungsgerät, wie Handy, PDA, eine derartige WLAN-Schnittstelle aufweist, so dass ohne große Änderungen diese Geräte für die verkehrsrelevante Kommunikation unter Verkehrsteilnehmern genutzt werden können. Sehr zuverlässig bei sich schnell bewegenden Objekten wie motorisierten Fahrzeugen ist dabei die das Derivat IEEE 802.11p nutzende Weiterbildung.

Denkbar ist auch, dass die Funk-Sende/Funk-Empfangseinrichtungen bzw. das zugehörige Verfahren die Kommunikation mit Verkehrsteilnehmern zumindest teilweise gemäß einem Mobilfunkstandard, wie dem GSM, UMTS, LTE oder Derivaten hiervon, durchführt. Dies ist insbesondere für eine bessere Durchdringung und Erfassung von Vorteil, da Fußgänger und Radfahrer, welche sich in Besitz eines Mobilfunkgerätes (Handys) befinden, wie bereits angedeutet, ebenfalls als Verkehrsteilnehmer in die Kommunikation integriert werden können und so ein umfassenderes Gesamtbild des Verkehrs gebildet werden kann.

Weitere Durchdringung erreicht man, wenn die Funk-Sende/Funk-Empfangseinrichtungen so weitergebildet werden, dass sie zur Kommunikation mit Verkehrsteilnehmern zumindest teilweise gemäß dem europäischen Standard ETSI TC ITS, dem amerikanischen so genannten "Vehicle Safety Communications Program, VSC" dem Nachfolger hiervon "Connected Vehicle Communications Program" oder japanischen "Advanced Vehicle Safety Program, AVS" betrieben werden. Hierdurch wird die erfindungsgemäße Einrichtung in verschiedenen Teilen der Welt einsetzbar.

Dies wird vorteilhaft ergänzt bzw. es bietet sich auch die Alternative, die verfahrensgemäß genutzten Funk-Sende-/FunkEmpfangseinrichtungen derart weiterzubilden, dass sie zur Kommunikation mit Verkehrsteilnehmern zumindest teilweise gemäß dem ISO Standard "continuous-air long and medium range", CALM, betrieben werden. Damit ist die Einrichtung nicht nur weltweit nutzbar, sondern dies auch ohne Änderungen bzw. nationalen Anpassungen, was dem Mobilitätsgedanken von Fahrzeugen angemessen ist.

Die erfindungsgemäße stationäre Einrichtung eines Systems zur Kommunikation zwischen Verkehrsteilnehmern untereinander und/oder zwischen, mobilen, Verkehrsteilnehmern und, stationären, Einrichtungen der Verkehrsinfrastruktur eines, nach Art des ad-hoc zusammenwirkenden, Drahtlos-, Kraftfahrzeugkommunikationssystems weist Mittel auf, die eine Bestimmung der geographischen Position der zweiten Einrichtungen zumindest auf Grundlage von mit einer Kommunikation mit den ersten Einrichtungen korrelierenden Größe durchführen.

Die stationäre Einrichtung gemäß der Erfindung ermöglicht durch die Mittel die Umsetzung des erfindungsgemäßen Verfahrens und bietet somit die volle Entfaltung der bei dem erfindungsgemäßen Verfahren genannten Vorteile.

Dies gilt auch für alle Weiterbildungen der stationären Einrichtung, welche Mittel zur Durchführung der einzelnen Weiterbildungen des Verfahrens aufweisen.

Die erfindungsgemäße stationäre Einrichtung zur Kommunikation auf Grundlage eines nach Art des ad-hoc zusammenwirkenden, insbesondere Drahtlos-, Kraftfahrzeugkommunikationssystems, wobei die Kommunikation zwischen Verkehrsteilnehmern untereinander und/oder zwischen Verkehrsteilnehmern und Verkehrsinfrastruktur erfolgt, ist derart mit Mitteln ausgestaltet, dass
a) im Nahfeld eines Knotenpunkts von Verkehrswegen, insbesondere Einmündungen oder Überschneidungen von Verkehrswegen wie Straßen- oder Bahnkreuzungen, eine, einem ersten Verkehrsteilnehmer zugeordnete, Funk-Sende-/Funk-Empfangseinrichtung kontinuierlich eine Nachricht an mindestens eine zweite sich im Funkversorgungsbereich der ersten Funk-Sende-/Funk-Empfangseinrichtung befindende zweite, einer Einrichtung der Verkehrsinfrastruktur zugeordnete, Funk-Sende-/Funk-Empfangseinrichtung sendet, wobei
b) das Versenden der Nachricht derart erfolgt, dass auf Grundlage der empfangenen Nachricht, eine erste Richtung einer Positionsveränderung des ersten Verkehrsteilnehmers ermittelt wird, und
c) auf Grundlage der Nachrichten eine Historie über ermittelte Richtungen gebildet wird, und
d) eine erste Korrelation zwischen der ersten Richtung und der Historie von Richtungen ermittelt wird, wobei
e) eine zweite Korrelation mit dem Ergebnis der ersten Korrelation und einer für die Steuerung der Verkehrsteilnehmer zugrunde gelegte, insbesondere bei der Initialisierung der Verkehrssteuerung dem geographischen Verlauf entsprechende, Referenzfahrspur ermittelt wird,
f) auf Grundlage der ersten Korrelation und/oder zweiten Korrelation eine Steuerung der Verkehrsteilnehmer erfolgt.

Die stationäre Einrichtung gemäß der Erfindung ermöglicht durch die Mittel die Umsetzung des erfindungsgemäßen Verfahrens und bietet somit die volle Entfaltung der bei dem erfindungsgemäßen Verfahren genannten Vorteile.

Dies gilt auch für alle Weiterbildungen der stationären Einrichtung, welche Mittel zur Durchführung der einzelnen Weiterbildungen des Verfahrens aufweisen.

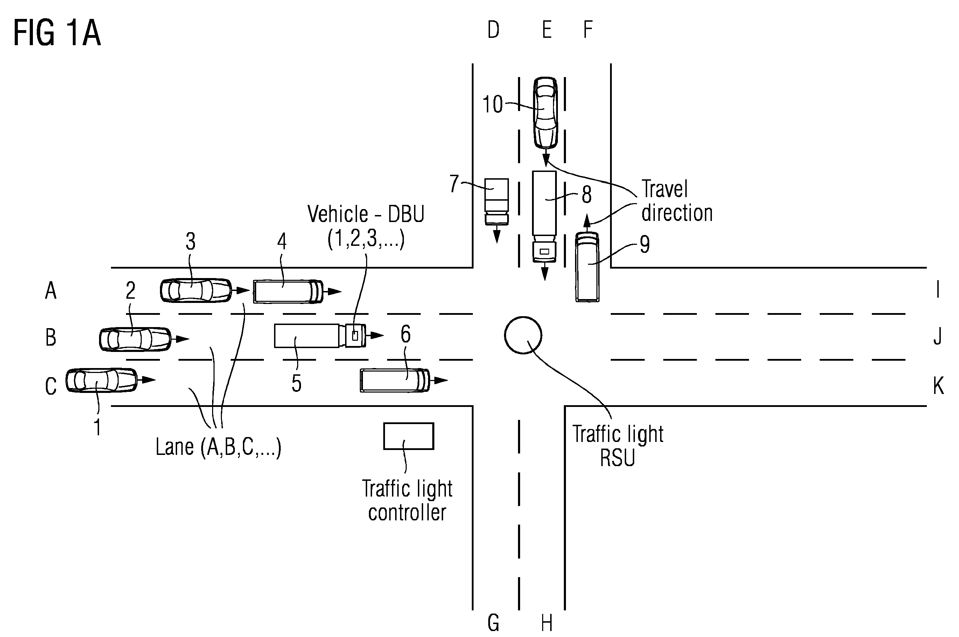

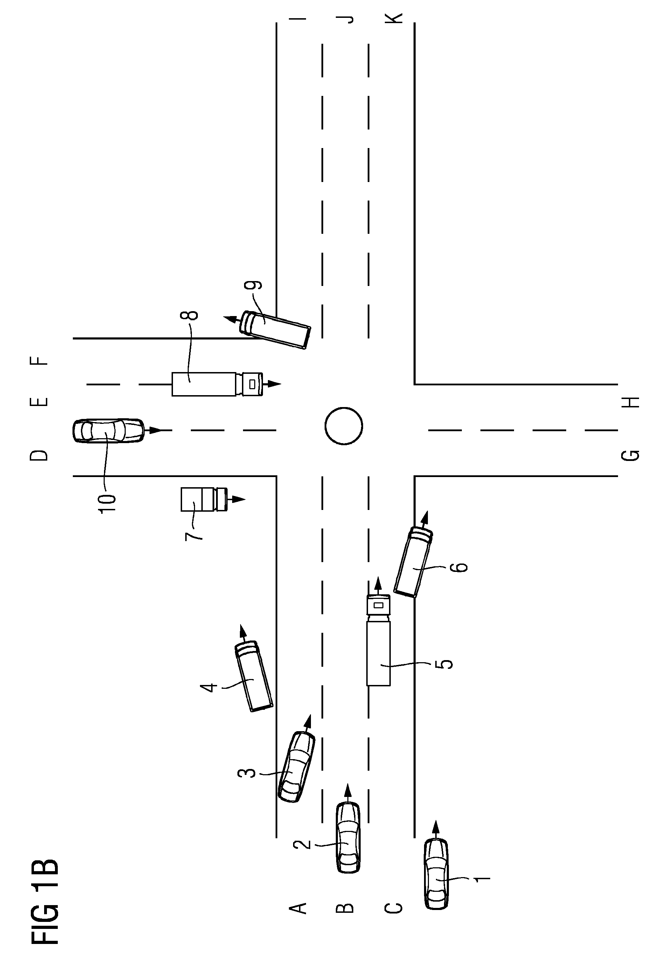

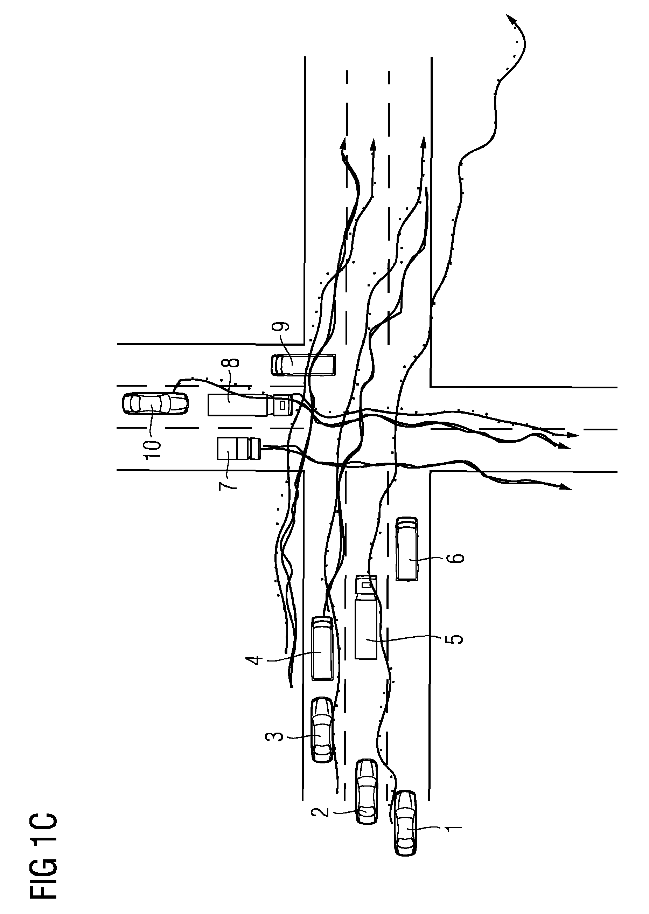

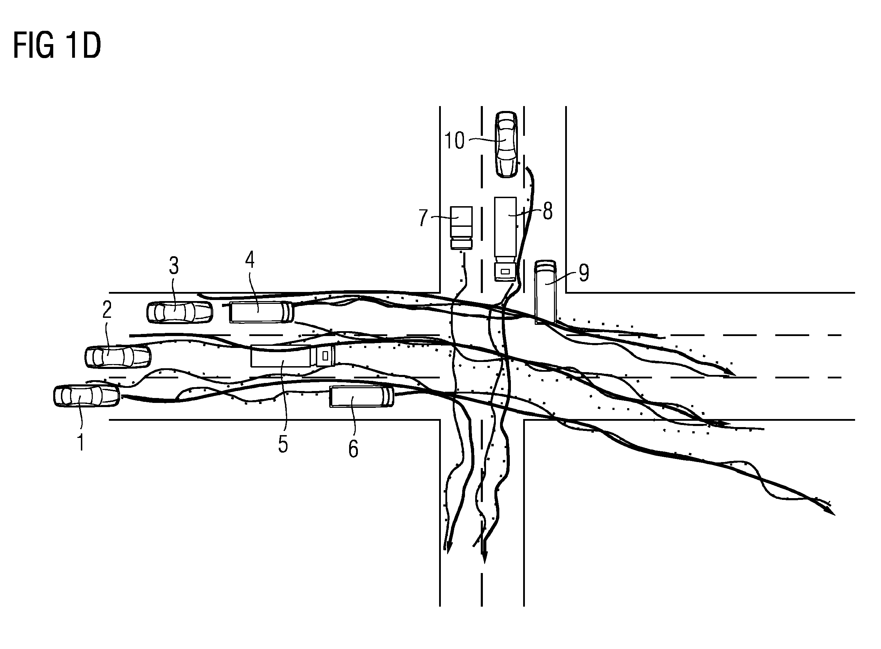

Die Erfindung wird beispielhaft anhand der Figur 1 näher erläutert, dabei zeigt die
- Figur 1a-d: schematisch die Situation von Verkehrsteilnehmern in einem mobilen ad-hoc Netz sowie die sich gemäß Ausführungsbeispiel der Erfindung darstellenden Einzelschritte der Fahrspurermittlung

Ausgehend von dem in Figur 1 behandelten Szenario, werden in den einzelnen Figurenteilen 1a...1d mögliche Ausgestaltungen und Weiterbildungen der Erfindung sowie Vorteile hiervon aufgezeigt.

Die Erfindung verbessert Verkehrssteuersysteme, welche insbesondere auf satellitenbasierte Technologie zur Positionsermittlung, wie beispielsweise GPS oder Galileo, setzen. Dies liegt insbesondere daran, dass solche Verfahren aktuell sehr populär sind, um eine globale Positionsbestimmung zu ermöglichen. Daher sind sie auch weit verbreitet.

Allerdings sind diese Systeme nicht geeignet, die Genauigkeitsanforderungen, die sich bei dem dargestellten Szenario zu Grunde liegen, zu bieten. Da derartige Systeme eine Abweichung von ungefähr ein bis zwei Metern aufweisen, welche sich durch Umwelteinflüsse und Ähnliches auf Abweichungen bis zu 30 Metern erhöhen kann.

Die erfindungsgemäße Lösung setzt daher darauf, dass sich bewegende Fahrzeuge, wie beispielsweise Autos, LKWs oder Züge kontinuierlich ihre Informationen senden, wie beispielsweise die Position, Geschwindigkeit und die Fahrtrichtung über Luftschnittstelle (OBU), welche in dem Auto oder Fahrzeug integriert ist. Empfangende Funkempfangs-/Funksendeeinrichtungen, welche in der sogenannten Road Side Unit (RSU) auf der Infrastrukturseite, wie beispielsweise Straßenkreuzungen bzw. Steuerungen davon Ampeln und Zugsteuerungen montiert sind, empfangen diese Information und extrahieren die Position und die Reise- bzw. Fahrtinformationen, wie Position, Geschwindigkeit, Fahrtrichtung und Fahrzeugausrichtung aus diesen regelmäßig gesendeten Nachrichten.

Erfindungsgemäß wird eingesetzt, dass die RSU die exakte Topologie (Geometrie) der Straßenspuren oder der Zug- bzw. Gleisverläufe der entsprechenden Umgebung, wie beispielsweise Weite der Fahrspur, Radius von Fahrspuren, die erlaubte Fahrtrichtung, kennt.

Da wie oben erwähnt die satellitengestützte Position, welche durch das Fahrzeug ermittelt wird, um mehrere Meter von der realen Position abweichen kann und somit sehr selten auf die exakte Position der der RSU bekannten Fahrspur passt, wird erfindungsgemäß die RSU nur wissen, wenn ein Fahrzeug auf einer bestimmten Fahrspur unterwegs ist, dass es sich exakt dort befindet, wenn es in dem dargestellten Szenario als Ausführungsbeispiel gemäß der Erfindung eine oder Kombinationen der folgenden Prozeduren verbindet:
a) Verfahrensschritte und Mittel, welche es erlauben, dass die relative Position der Fahrzeuge zueinander oder in einer bestimmten Zeit ermittelt wird,
b) Verfahrensschritte und Mittel, welche Attribute der Fahrzeuge, wie beispielsweise Länge, Weite und Typ des Fahrzeugs in Betracht zieht,
c) Verfahrensschritte und Mittel zur Ermittlung der Richtung bzw. Ausrichtung der Reise bzw. Fahrzeuge zu einem bestimmten Zeitpunkt,
d) Verfahrensschritte und Mittel, die Fahrspuren der Fahrzeuge innerhalb eines kleinen Zeitfensters, beispielsweise wenige Sekunden, ermitteln,
e) Verfahrensschritte und Mittel, welche diese berechneten Spuren übereinander legen.

Der Figurteil 1 zeigt eine Ausgangssituation, d.h. ein Szenario im Straßenverkehr, an einer derartigen Straßenkreuzung, welche durch eine Ampelsteuerung TLC gesteuert wird. Die Ampelsteuerung TLC kann die Signalphase einer Ampel RSU und das Timing nur dann optimieren, wenn das Wissen vorhanden ist, wie viele Fahrzeuge warten oder auf einer bestimmten Fahrspur A...K sich fahrend befinden und zwar in einer spezifischen Richtung.

Die Road Side Unit (RSU), welche in diesem Szenario beispielhaft innerhalb der Ampel positioniert ist, empfängt dabei kontinuierlich Statusinformationen von den Fahrzeugen (Position, Geschwindigkeit, Fahrtrichtung, Ausrichtung, Fahrzeugtyp, Fahrzeugdimensionen) und steht zur Steuerung des Verkehrs mit der Ampelsteuerung TLC diesbezüglich in Verbindung.

Im Figurenteil 1a sind zwar nur Fahrzeuge dargestellt. Fußgänger, Fahrräder, Züge oder andere Verkehrsteilnehmer sind aber von der Erfindung bzw. ihrer Implementierung nicht ausgenommen und die erfindungsgemäße Erfassung und Auswertung ihrer Daten ist gemäß der erfindungsgemäßen Lösung ebenfalls möglich. Beispielsweise ermöglicht Nutzung von Smartphones durch Fußgänger und/oder Radfahrer, diese auch zur erfindungsgemäßen Positionsbestimmung usf. heranzuziehen.

Wie oben diskutiert, ist die Positionsinformation, welche von Satellitenpositionierungssystemen, wie GPS, Galileo verwendet wird, nicht akkurat genug, und kann wie bereits erwähnt, um bis zu 30 Meter Abweichung aufweisen.

Ein erfindungsgemäßer Gedanke beruht auf der Annahme, dass Positionsfehler aufgrund von atmosphärischen Konditionen gleich ist für alle Satellitenreceiver in den Fahrzeugen. Bei dem Ausführungsbeispiel der Erfindung wird dadurch, dass die Fahrzeugbewegungen in Relation gesetzt werden, dieser Fehler somit entfernt.

Dies wird im Figurenteil 1b verdeutlicht, welcher ein Beispiel von den erfassten Positionen der Fahrzeuge 1...10 durch Satellitenpositionierung und deren Fahrtrichtung zu einem bestimmten Zeitpunkt in einem bestimmten spezifischen Gebiet, z.B. einer Straßenkreuzung, wiedergibt.

Wie im Figurenteil 1b zu erkennen, sind aufgrund der schlechten Genauigkeit der Satellitenpositionierungssysteme die Fahrzeuge 1...10 nicht geografisch deckungsgleich zu der jeweiligen Richtung bzw. Position der Fahrspuren, wie sie in der Road Side Unit RSU gespeichert ist. Wenn man nun die relative Position der Fahrzeuge 1...10 zueinander in Bezug stellt und unter Bezugnahme des Wissens der Straßenkreuzungsgeometrie seitens der Road Side Unit RSU, ist diese in der Lage, eine grobe Bestimmung zu berechnen, hinsichtlich welche Fahrspur A...K durch welches Fahrzeug 1...10 benutzt wird, so dass dies der Verkehrsteuerung zugrunde gelegt werden kann.

Es kann bei dem in Figurenteil 1b gezeigten Szenario ferner anhand der Darstellung der Fahrzeuge 1...10, ihrer Positionen sowie der Fahrzeugtypen -und Dimensionen erkannt werden, wie sich die Positionsinformation und die Fahrzeugdimensionen, welche von der Road Side Unit RSU empfangen und welche durch die Fahrzeuge 1...10 versandt werden, darstellt.

Dieser Schnappschuss in der Zeit zeigt, dass das Fahrzeug 1 sich relativ rechts zum Fahrzeug 2 und das Fahrzeug 3 relativ links zum Fahrzeug 2 befindet. In einer ersten Näherung sieht es also so aus, dass sich das Fahrzeug 1 auf der Fahrspur C, Fahrzeug 2 auf der Fahrspur B und Fahrzeug 3 auf der Fahrspur A befindet.

Eine analoge Betrachtung wird zudem auch für die Fahrzeuge 7, 8 und 9 durchgeführt. Aufgrund der Ausrichtung der Fahrzeuge ist es nun klar, dass Fahrzeuge 7 und 8 sich der Kreuzung nähern und das Fahrzeug 9 die Kreuzung verlässt. Aufgrund der relativen Positionierung ist ferner zu erkennen, dass Fahrzeug 7 in Bezug auf Fahrzeug 8 auf der rechten Seite fährt. Aufgrund des Wissens der Topologie (Geometrie) der Kreuzung ist es nun evident, auf welchen Fahrspuren A...K sich die Fahrzeuge 1...10 bewegen, sogar wenn die absolute Positionierung nicht klar ist.

Gemäß Weiterbildung dieser Erfindung speichert die Road Side Unit RSU die empfangenen Positionen jedes Fahrzeugs 1...10 und berechnet die befahrenen Spuren für jedes weitere Fahrzeug, welches sich nähert, wartet und auch die Kreuzung verlässt.

Figur 1c zeigt ein Beispiel wie solche berechneten Fahrspurlinien für jedes Fahrzeug, die im Laufe einer gewissen Zeit, durch die Road Side Unit RSU ermittelt und gespeichert worden sind und als punktierte Linien dargestellt sind. Die Road Side Unit RSU überlappt alle diese Linien übereinander, so dass ein überlagertes, so genanntes Overlap, -Bild entsteht und berechnet hierauf basierend auf den Fahrzeugbewegungen, d.h. Richtungen, die Topologie der Straßenkreuzung (siehe Figur 1d). Hierdurch ist also eine automatische Anpassung der Topologie möglich bzw. die Topologie, wie sie sich verzerrt durch atmosphärische Störungen und anderen Abweichungen der satellitengestützten Positionsbestimmung.

Es wird also erfindungsgemäß ausgenutzt, dass Fahrzeuge, welche sich auf der gleichen Fahrspur bewegen, eine ähnliche Fahrspur erzeugen, welche zusammen genommen werden kann und zu einer Fahrspurinformation (Fahrspurlinienhistorie) berechnet werden. Je mehr Fahrzeuge betrachtet werden über die Zeit, desto besser berechnete Fahrspuren werden dabei daraus folgen.

Die Kombination aller berechneten Fahrspuren formt gemäß der Erfindung dann eine berechnete Topologie, welche logisch mit der in der Road Side Unit RSU gespeicherte Topologie zur Deckung gebracht (gemappt) wird, wie es in Figur 1d zu erkennen ist. Wenn ein neues Fahrzeug sich der Straßenkreuzung nähert und seine Attribute übermittelt, wie Position, Geschwindigkeit, Ausrichtung und Dimension, beginnt die Road Side Unit RSU die Fahrspurlinien (auch Trajectorylinien) dieses neuen Fahrzeugs zu berechnen.

Parallel dazu wird diese Fahrspurlinie des neuen Fahrzeugs verglichen mit der existierenden berechneten Topologie für die Fahrspurbestimmung. Diese neue Fahrspurlinie wird dann über die existierende Fahrspurlinienabbildung übergelegt, um eine aufgefrischte Berechnung der Topologie zu ermöglichen (update). Aufgrund von atmosphärischen Fehlern und dem Wechsel von Positionen, welche durch Satellitenpositionssysteme erzielt werden, sind berechnete Fahrspurlinien am variieren im Hinblick auf die Zeit, was also zusätzlich durch die Road Side Unit RSU in Betracht gezogen werden muss, so dass ältere aufgrund der Fahrspurlinien berechnete Fahrspurengeometrien verworfen werden müssen.

Einer der Vorteile der Erfindung ist somit eine kostengünstige Bestimmung der Position von Fahrzeugen auf spezifischen Fahrspuren innerhalb einer Verkehrsregion, wie z.B. einer Kreuzung, welche Satellitenpositionssysteme mit geringer Genauigkeit nutzen (müssen), so dass lokale Verkehrskontroll/Steuerungssysteme detaillierte Informationen, wie beispielsweise Anzahl der Fahrzeuge, Geschwindigkeit, Richtung, welche Fahrspur genutzt wird, über die Fahrzeuge erhalten, welche sich auf den Fahrspuren bewegen oder warten.

Solche Steuerungssysteme sind dann ferner in der Lage, sich an die Verkehrssituation anzupassen, d.h. die Steuerung hieran anzupassen, wie zum Beispiel das Signal, welches zu zeigen ist, Signalphase, das Timing der Ampelschaltung und zwar für jeden einzelnen sich nähernden Verkehrsteilnehmer.

Auf diese Art wird der Verkehrsfluss optimiert und Wartezeiten reduziert, beispielsweise Rotlichtphasen. Daher entfällt das Bedürfnis nach zusätzlichen hoch spezialisierten Sensoren und Kreuzungen bzw. Steuerungen hierfür werden deutlich günstiger.

## Patentansprüche

1. Verfahren zur Kommunikation auf Grundlage eines nach Art des ad-hoc zusammenwirkenden Drahtlos-Kraftfahrzeugkommunikationssystems, wobei die Kommunikation zwischen Verkehrsteilnehmern (1-10) untereinander undzwischen Verkehrsteilnehmern und Verkehrsinfrastruktur erfolgt, **dadurch gekennzeichnet, dass**
a) im Nahfeld eines Knotenpunkts von Verkehrswegen, insbesondere Einmündungen oder Überschneidungen von Verkehrswegen wie Straßen- oder Bahnkreuzungen, eine, einem ersten Verkehrsteilnehmer zugeordnete, Funk-Sende-/Funk-Empfangseinrichtung kontinuierlich eine Nachricht an mindestens eine zweite sich im Funkversorgungsbereich der ersten Funk-Sende-/FunkEmpfangseinrichtung befindende zweite, einer Einrichtung der Verkehrsinfrastruktur zugeordnete, Funk-Sende-/Funk-Empfangseinrichtung sendet,
b) das Versenden der Nachricht derart erfolgt, dass auf Grundlage der empfangenen Nachricht, eine erste Richtung einer Positionsveränderung des ersten Verkehrsteilnehmers ermittelt wird,
c) auf Grundlage der Nachrichten eine Historie über ermittelte Richtungen gebildet wird,
d) eine erste Korrelation zwischen der ersten Richtung und der Historie von Richtungen ermittelt wird,
e) eine zweite Korrelation mit dem Ergebnis der ersten Korrelation und einer für die Steuerung der Verkehrsteilnehmer zugrunde gelegte, insbesondere bei der Initialisierung der Verkehrssteuerung dem geographischen Verlauf entsprechende, Referenzfahrspur vorgezeichneter Fahrspuren am Knotenpunkt von Verkehrswegen ermittelt wird,
f) auf Grundlage der ersten Korrelation oder zweiten Korrelation eine Steuerung der Verkehrsteilnehmer erfolgt.

2. Verfahren nach dem vorhergehenden Anspruch, **dadurch gekennzeichnet, dass** bei Vorhandensein von zumindest zwei Verkehrsteilnehmern, die Historie seitens der Verkehrsinfrastruktur zumindest aufgrund einer relativen Position der Verkehrsteilnehmer zueinander gebildet wird.

3. Verfahren nach dem vorhergehenden Anspruch, **dadurch gekennzeichnet, dass** bei Vorhandensein von zumindest zwei Verkehrsteilnehmern, die Historie seitens der Verkehrsinfrastruktur aufgrund der zeitlichen Entwicklung der Position des ersten Verkehrsteilnehmers innerhalb eines Zeitfensters gebildet wird.

4. Verfahren nach dem vorhergehenden Anspruch, **dadurch gekennzeichnet, dass** die Zeitdauer des Zeitfensters, insbesondere auf eine Sekunde, festgelegt wird.

5. Verfahren nach einem der vorhergehenden Ansprüche, **dadurch gekennzeichnet, dass** die Steuerung der Verkehrsteilnehmer derart erfolgt, dass Informationen von Signalgebern, insbesondere elektronische Schilder, Ampeln, Verkehrsleitsysteme, auf Grundlage der ersten Korrelation verändert werden.

6. Verfahren nach einem der vorhergehenden Ansprüche, **dadurch gekennzeichnet, dass** die Nachricht im Nahfeld, insbesondere dem Funksende-/Funkversorgungsbereich der Einrichtung der Verkehrsinfrastruktur, zumindest zeitweise periodisch wiederholt gesendet wird.

7. Verfahren nach dem vorhergehenden Anspruch, **dadurch gekennzeichnet, dass** die Zeitdauer der Periode, insbesondere auf 100 Millisekunden, festgelegt wird.

8. Verfahren nach einem der vorhergehenden Ansprüche, **dadurch gekennzeichnet, dass** die Nachricht eine die Fahrtrichtung, Position, Dimension, Typ und/oder Geschwindigkeit des ersten Verkehrsteilnehmers, insbesondere Fahrzeugs, wiedergebende Information enthält.

9. Verfahren nach einem der vorhergehenden Ansprüche, **dadurch gekennzeichnet, dass** die Historie derart gebildet wird, dass anhand der in den Zeitfenstern empfangenen Daten Fahrspuren der Fahrzeuge rechnertechnisch ermittelt und durch Bildung einer dritten Korrelation derart korreliert werden, dass die für die Steuerung der Verkehrsteilnehmer zugrunde gelegte, insbesondere bei der Initialisierung der Verkehrssteuerung dem geographische Verlauf entsprechende, Referenzfahrspur durch die Korrelationsmaxima neu gebildet und gespeichert wird.

10. Verfahren nach einem der vorhergehenden Ansprüche, **dadurch gekennzeichnet, dass** zu festgelegten Ereignissen, insbesondere einem Timerablauf und/oder zumindest bei einer einen Schwellwert übersteigernden Abweichung einer aktuell ermittelten Fahrspur von der Referenzfahrspur, eine Aktualisierung der Referenzfahrspur erfolgt.

11. Verfahren nach einem der vorhergehenden Ansprüche, **dadurch gekennzeichnet, dass** die übermittelte Position auf Grundlage eines satellitengestützten Navigationssystems, wie GPS, Galileo und/oder anderen nationalen und internationalen Navigationssatellitensystemen zur Positionsbestimmung, ermittelt wird.

12. Verfahren nach einem der vorhergehenden Ansprüche, **dadurch gekennzeichnet, dass** die Datenübertragung gemäß einem dedizierten Kurzstreckenfunkkommunikationsstandard, insbesondere dem so genannten Dedicated Short Range Communication, "DSRC", erfolgt.

13. Verfahren nach einem der vorhergehenden Ansprüche, **dadurch gekennzeichnet, dass** die Datenübertragung gemäß dem so genannten Wireless Access in Vehicular Environments, "WAVE"-Standard IEEE1609 oder Derivaten hiervon erfolgt.

14. Verfahren nach einem der vorhergehenden Ansprüche, **dadurch gekennzeichnet, dass** die Datenübertragung zumindest teilweise gemäß Standard ETSI Intelligent Transportation Systems, ITS oder seinen Derivaten erfolgt.

15. Verfahren nach einem der vorhergehenden Ansprüche, **dadurch gekennzeichnet, dass** die Datenübertragung zumindest teilweise gemäß Standards IEEE 802.11 oder seinen Derivaten, insbesondere dem IEEE 802.11p, erfolgt.

16. Verfahren nach einem der vorhergehenden Ansprüche, **dadurch gekennzeichnet, dass** eine höher priorisierte erste, insbesondere sicherheitsrelevante, Datenübertragung gemäß IEEE 802.11e oder IEEE 802.11p oder ETSI IST DCC (Decentralized Congestion Control) gebildet wird.

17. Verfahren nach einem der vorhergehenden Ansprüche, **dadurch gekennzeichnet, dass** eine niedriger priorisierte zweite, insbesondere teilnehmerindividuelle, Datenübertragung gemäß dem IEEE 802.11 a/b/g oder weiteren Derivaten hiervon gebildet wird.

18. Verfahren nach einem der vorhergehenden Ansprüche, bei dem die Kommunikation mit Verkehrteilnehmern zumindest teilweise gemäß einem Mobilfunkstandard, wie dem GSM, UMTS, LTE oder Derivaten hiervon, erfolgt.

19. Verfahren nach einem der vorhergehenden Ansprüche, bei dem die Kommunikation mit Verkehrsteilnehmern zumindest teilweise gemäß dem europäischen Standard ETSI TC ITS, dem amerikanischen so genannten "Vehicle Safety Communications Program, VSC", dem Nachfolger hiervon "Connected Vehicle Communications Program" oder japanischen "Advanced Vehicle Safety Program, AVS" erfolgt.

20. Verfahren nach einem der vorhergehenden Ansprüche, bei dem die Kommunikation mit Verkehrsteilnehmern zumindest teilweise gemäß dem ISO Standard "continuous-air long and medium range", CALM, erfolgt.

21. Stationäre Einrichtung der Verkehrsinfrastruktur zur Kommunikation auf Grundlage eines nach Art des ad-hoc zusammenwirkenden Drahtlos- Kraftfahrzeugkommunikationssystems, wobei die Kommunikation zwischen Verkehrsteilnehmern (1-10) untereinander und zwischen Verkehrsteilnehmern und Verkehrsinfrastruktur erfolgt, **gekennzeichnet durch** Mittel, die derart ausgestaltet sind, dass
a) im Nahfeld eines Knotenpunkts von Verkehrswegen, insbesondere Einmündungen oder Überschneidungen von Verkehrswegen wie Straßen- oder Bahnkreuzungen, eine, einem ersten Verkehrsteilnehmer zugeordnete, Funk-Sende-/Funk-Empfangseinrichtung kontinuierlich eine Nachricht an mindestens eine zweite sich im Funkversorgungsbereich der ersten Funk-Sende-/FunkEmpfangseinrichtung befindende zweite, einer Einrichtung der Verkehrsinfrastruktur zugeordnete, Funk-Sende-/FunkEmpfangseinrichtung sendet,
b) das Versenden der Nachricht derart erfolgt, dass auf Grundlage der empfangenen Nachricht, eine erste Richtung einer Positionsveränderung des ersten Verkehrsteilnehmers ermittelt wird,
c) auf Grundlage der Nachrichten eine Historie über ermittelte Richtungen gebildet wird,
d) eine erste Korrelation zwischen der ersten Richtung und der Historie von Richtungen ermittelt wird,
e) eine zweite Korrelation mit dem Ergebnis der ersten Korrelation und einer für die Steuerung der Verkehrsteilnehmer zugrunde gelegte, insbesondere bei der Initialisierung der Verkehrssteuerung dem geographischen Verlauf entsprechende, Referenzfahrspur vorgezeichneter Fahrspuren am Knotenpunkt von Verkehrswegen ermittelt wird,
f) auf Grundlage der ersten Korrelation oder zweiten Korrelation eine Steuerung der Verkehrsteilnehmer erfolgt.

22. Stationäre Einrichtung nach dem vorhergehenden Anspruch, **gekennzeichnet durch** Mittel zur Durchführung des Verfahrens nach einem der Verfahrensansprüche 2 bis 20.

## Claims

1. Method for communication on the basis of a wireless motor vehicle communication system interacting in an ad-hoc manner, wherein the communication takes place among road users (1-10) and between road users and traffic infrastructure, **characterized in that**
a) in the vicinity of a node of traffic routes, particularly T-junctions or intersections of traffic routes such as road junctions or grade crossings, a radio transmission/radio reception device associated with a first road user continuously sends a message to at least one second radio transmission/radio reception device, associated with a device of the traffic infrastructure, that is in a radio coverage area of the first radio transmission/radio reception device,
b) the message is sent in a manner such that the received message is taken as a basis for ascertaining a first direction of a change of position of the first road user,
c) the messages are taken as a basis for forming a history about ascertained directions,
d) a first correlation between the first direction and the history of directions is ascertained,
e) a second correlation with the result of the first correlation and a reference lane from predetermined lanes at the node of traffic routes is ascertained, said reference lane being taken as a basis for control of the road users and corresponding to the geographical profile, particularly for initialization of traffic control,
f) the first correlation or second correlation is/are taken as a basis for controlling the road users.

2. Method according to the preceding claim, **characterized in that** when at least two road users are present the history is formed by the traffic infrastructure at least on the basis of a relative position of the road users in relation to one another.

3. Method according to the preceding claim, **characterized in that** when at least two road users are present the history is formed by the traffic infrastructure on the basis of the temporal trend in the position of the first road user within a time window.

4. Method according to the preceding claim, **characterized in that** the length of the time window is stipulated, particularly as one second.

5. Method according to one of the preceding claims, **characterized in that** the road users are controlled such that information from signal transmitters, particularly electronic signs, traffic lights, traffic management systems, is changed on the basis of the first correlation.

6. Method according to one of the preceding claims, **characterized in that** the message is at least intermittently sent at periodically repeated intervals in the vicinity, particularly the radio transmission/radio coverage area of the device of the traffic infrastructure.

7. Method according to the preceding claim, **characterized in that** the length of the period is stipulated, particularly as 100 milliseconds.

8. Method according to one of the preceding claims, **characterized in that** the message contains a piece of information conveying the direction of travel, position, dimension, type and/or speed of the first road user, particularly vehicle.

9. Method according to one of the preceding claims, **characterized in that** the history is formed such that the data received in the time windows are used to ascertain lanes for the vehicles by computer and to correlate them, by forming a third correlation, such that the reference lane that is taken as a basis for controlling the road users and that corresponds to the geographical profile, particularly for initialization of traffic control, is formed afresh by the correlation maxima and stored.

10. Method according to one of the preceding claims, **characterized in that** the reference lane is updated for stipulated events, particularly timer expiry and/or at least in the event of a discrepancy above a threshold value between a currently ascertained lane and the reference lane.

11. Method according to one of the preceding claims, **characterized in that** the transmitted position is ascertained on the basis of a satellite-assisted navigation system, such as GPS, Galileo and/or other national and international navigation satellite systems for position finding.

12. Method according to one of the preceding claims, **characterized in that** the data transmission takes place on the basis of a dedicated short-range radio communication standard, particularly what is known as Dedicated Short-Range Communication, "DSRC".

13. Method according to one of the preceding claims, **characterized in that** the data transmission takes place on the basis of what is known as the Wireless Access in Vehicular Environments, "WAVE", standard IEEE1609 or derivatives thereof.

14. Method according to one of the preceding claims, **characterized in that** the data transmission takes place at least in part on the basis of ETSI standard Intelligent Transportation Systems, ITS, or its derivatives.

15. Method according to one of the preceding claims, **characterized in that** the data transmission takes place at least in part on the basis of IEEE standard 802.11 or its derivatives, particularly IEEE 802.11p.

16. Method according to one of the preceding claims, **characterized in that** a higher-priority first, in particular safety-relevant, data transmission based on IEEE 802.11e or IEEE 802.11p or ETSI IST DCC (Decentralized Congestion Control) is formed.

17. Method according to one of the preceding claims, **characterized in that** a lower-priority second, in particular subscriber-individual, data transmission based on IEEE 802.11a/b/g or further derivatives thereof is formed.

18. Method according to one of the preceding claims, in which the communication with road users takes place at least in part on the basis of a mobile radio standard, such as GSM, UMTS, LTE or derivatives thereof.

19. Method according to one of the preceding claims, in which the communication with road users takes place at least in part on the basis of the European standard ETSI TC ITS, the American "Vehicle Safety Communications Program, VSC", the successor thereto "Connected Vehicle Communications Program" or the Japanese "Advanced Vehicle Safety Program, AVS".

20. Method according to one of the preceding claims, in which the communication with road users takes place at least in part on the basis of the ISO standard "continuous-air long and medium range", CALM.

21. Static device of the traffic infrastructure for communication on the basis of a wireless motor vehicle communication system interacting in an ad-hoc manner, wherein the communication takes place among road users (1-10) and between road users and traffic infrastructure, **characterized by** means that are designed such that
a) in the vicinity of a node of traffic routes, particularly T-junctions or intersections of traffic routes such as road junctions or grade crossings, a radio transmission/radio reception device associated with a first road user continuously sends a message to at least one second radio transmission/radio reception device, associated with a device of the traffic infrastructure, that is in a radio coverage area of the first radio transmission/radio reception device,
b) the message is sent in a manner such that the received message is taken as a basis for ascertaining a first direction of a change of position of the first road user,
c) the messages are taken as a basis for forming a history about ascertained directions,
d) a first correlation between the first direction and the history of directions is ascertained,
e) a second correlation with the result of the first correlation and a reference lane from predetermined lanes at the node of traffic routes is ascertained, said reference lane being taken as a basis for control of the road users and corresponding to the geographical profile, particularly for initialization of traffic control,
f) the first correlation or second correlation is/are taken as a basis for controlling the road users.

22. Static device according to the preceding claim, **characterized by** means for performing the method according to one of Claims 2 to 20.

## Revendications

1. Procédé de communication sur la base d'un système de communication sans fil de véhicule coopérant à la manière du système ad-hoc, dans lequel la communication s'effectue entre des usagers de la voie publique (1-10) entre eux et entre des usagers de la voie publique et une infrastructure routière, **caractérisé en ce que**
a) à proximité d'un noeud de voies de circulation, en particulier de débouchés ou d'intersections de voies de circulation comme des croisements de routes ou de voies ferrées, un dispositif d'émission radio/de réception radio associé à un premier usager de la voie publique envoie en continu une information à au moins un deuxième dispositif d'émission radio/de réception radio associé à un dispositif de l'infrastructure routière se trouvant dans la zone de captation radio du premier dispositif d'émission radio/de réception radio,
b) l'émission de l'information est effectuée de telle manière que, sur la base de l'information reçue, une première direction d'un changement de position du premier usager de la voie publique soit déterminée,
c) sur la base des informations, on forme un historique des directions déterminées,
d) on détermine une première corrélation entre la première direction et l'historique des directions,
e) on détermine une deuxième corrélation avec le résultat de la première corrélation et une voie de circulation de référence de voies de circulation tracées utilisée pour la commande des usagers de la voie publique, correspondant au tracé géographique en particulier lors de l'initialisation de la commande du trafic, au noeud de voies de circulation,
f) on procède à une commande des usagers de la voie publique sur la base de la première corrélation ou de la deuxième corrélation.

2. Procédé selon la revendication précédente, **caractérisé en ce qu'**en présence d'au moins deux usagers de la voie publique, on forme l'historique du côté de l'infrastructure routière au moins sur la base d'une position relative des usagers de la voie publique l'un par rapport à l'autre.

3. Procédé selon la revendication précédente, **caractérisé en ce qu'**en présence d'au moins deux usagers de la voie publique, on forme l'historique du côté de l'infrastructure routière sur la base de l'évolution temporelle de la position du premier usager de la voie publique à l'intérieur d'un créneau de temps.

4. Procédé selon la revendication précédente, **caractérisé en ce que** la durée temporelle du créneau de temps est fixée, en particulier à une seconde.

5. Procédé selon l'une quelconque des revendications précédentes, **caractérisé en ce que** l'on effectue la commande des usagers de la voie publique de telle manière que des informations fournies par des moyens de signalisation, en particulier des panneaux électroniques, des feux de signalisation, des systèmes de guidage du trafic, soient changées sur la base de la première corrélation.

6. Procédé selon l'une quelconque des revendications précédentes, **caractérisé en ce que** l'on émet l'information dans le champ proche, en particulier dans la zone d'émission radio/de captation radio du dispositif de l'infrastructure routière, au moins de façon répétée de manière périodique dans le temps.

7. Procédé selon la revendication précédente, **caractérisé en ce que** la durée temporelle de la période est fixée, en particulier à 100 millisecondes.

8. Procédé selon l'une quelconque des revendications précédentes, **caractérisé en ce que** l'information contient des informations donnant une direction de déplacement, une position, une dimension, un type et/ou une vitesse du premier usager de la voie publique, en particulier du véhicule.

9. Procédé selon l'une quelconque des revendications précédentes, **caractérisé en ce que** l'on forme l'historique de telle manière que les voies de circulation des véhicules soient déterminées par le calcul à l'aide des données reçues dans les créneaux de temps et qu'elles soient corrélées par formation d'une troisième corrélation de telle manière que la voie de circulation de référence utilisée pour la commande des usagers de la voie publique, correspondant en particulier au tracé géographique lors de l'initialisation de la commande du trafic, soit de nouveau formée et mémorisée par les maxima de corrélation.

10. Procédé selon l'une quelconque des revendications précédentes, **caractérisé en ce que** l'on opère une actualisation de la voie de circulation de référence à des événements considérés, en particulier un écoulement de minuterie et/ou au moins lors d'un écart dépassant une valeur de seuil entre une voie de circulation déterminée instantanément et la voie de circulation de référence.

11. Procédé selon l'une quelconque des revendications précédentes, **caractérisé en ce que** l'on détermine la position transmise sur la base d'un système de navigation par satellites, par exemple GPS, Galileo et/ou d'autres systèmes nationaux et internationaux de navigation par satellites pour la détermination de position.

12. Procédé selon l'une quelconque des revendications précédentes, **caractérisé en ce que** l'on effectue la transmission de données selon un standard de communication radio à courte portée spécialisé, en particulier le standard appelé Dedicated Short Range Communication, "DSRC".

13. Procédé selon l'une quelconque des revendications précédentes, **caractérisé en ce que** l'on effectue la transmission de données selon le système appelé Wireless Access in Vehicular Environments, standard "WAVE"-IEEE609 ou des dérivés de celui-ci.

14. Procédé selon l'une quelconque des revendications précédentes, **caractérisé en ce que** l'on effectue la transmission de données au moins en partie selon le standard ETSI Intelligent Transportation Systems, ITS ou ses dérivés.

15. Procédé selon l'une quelconque des revendications précédentes, **caractérisé en ce que** l'on effectue la transmission de données au moins en partie selon le standard IEEE 802.11 ou ses dérivés, en particulier IEEE 802.11p.

16. Procédé selon l'une quelconque des revendications précédentes, **caractérisé en ce que** l'on forme une première transmission de données à plus haute priorité, en particulier au niveau de la sécurité, selon les standards IEEE 802.11e ou IEEE 802.11p ou ETSI IST DCC (Decentralized Congestion Control).

17. Procédé selon l'une quelconque des revendications précédentes, **caractérisé en ce que** l'on forme une deuxième transmission de données à priorité moins élevée, en particulier au niveau individuel des usagers, selon IEEE 802.11 a/b/g ou d'autres dérivés de celui-ci.

18. Procédé selon l'une quelconque des revendications précédentes, dans lequel on effectue la communication avec des usagers de la voie publique au moins en partie selon un standard de téléphonie mobile, comme le GSM, UMTS, LTE ou des dérivés de ceux-ci.

19. Procédé selon l'une quelconque des revendications précédentes, dans lequel on effectue la communication avec des usagers de la voie publique au moins en partie selon le standard européen ETSI TC ITS, le standard américain appelé "Vehicle Safety Communications Program, VSC", le successeur de celui-ci "Connected Vehicle Communications Program" ou le standard japonais "Advanced Vehicle Safety Program, AVS".

20. Procédé selon l'une quelconque des revendications précédentes, dans lequel on effectue la communication avec des usagers de la voie publique au moins en partie selon la norme ISO "Continuous-air Long and Medium Range", CALM.

21. Dispositif stationnaire de l'infrastructure routière pour la communication sur la base d'un système de communication sans fil de véhicule automobile coopérant à la manière d'un système ad-hoc, dans lequel on effectue la communication entre des usagers de la voie publique (1-10) entre eux et entre des usagers de la voie publique et une infrastructure routière, **caractérisé par** des moyens qui sont configurés de telle manière que
a) à proximité d'un noeud de voies de circulation, en particulier de débouchés ou d'intersections de voies de circulation comme des croisements de routes ou de voies ferrées, un dispositif d'émission radio/de réception radio associé à un premier usager de la voie publique envoie en continu une information à au moins un deuxième dispositif d'émission radio/de réception radio associé à un dispositif de l'infrastructure routière se trouvant dans la zone de captation radio du premier dispositif d'émission radio/de réception radio,
b) l'émission de l'information est effectuée de telle manière que, sur la base de l'information reçue, une première direction d'un changement de position du premier usager de la voie publique soit déterminée,
c) sur la base des informations, on forme un historique des directions déterminées,
d) on détermine une première corrélation entre la première direction et l'historique des directions,
e) on détermine une deuxième corrélation avec le résultat de la première corrélation et une voie de circulation de référence de voies de circulation tracées utilisée pour la commande des usagers de la voie publique, correspondant au tracé géographique en particulier lors de l'initialisation de la commande du trafic, au noeud de voies de circulation,
f) on procède à une commande des usagers de la voie publique sur la base de la première corrélation ou de la deuxième corrélation.

22. Dispositif stationnaire selon la revendication précédente, **caractérisé par** des moyens pour la mise en oeuvre du procédé selon l'une quelconque des revendications de procédé 2 à 20.
